# EUROPÄISCHE PATENTSCHRIFT

(11) **EP 2 255 094 B1**
(45) Veröffentlichungstag und Bekanntmachung des Hinweises auf die Patenterteilung: **07.05.2014**
(21) Anmeldenummer: 08734850.4
(22) Anmeldetag: 28.03.2008
(51) Int. Cl.: F15B 13/08, F16K 27/00

(54) **VENTILBATTERIE**
VALVE ARRAY
BATTERIE DE DISTRIBUTEURS

(43) Veröffentlichungstag der Anmeldung: 01.12.2010
(73) Patentinhaber: FESTO AG & Co. KG, 73734 Esslingen (DE)
(72) Erfinder: BERNER, Michael, 73230 Kirchheim (DE); MACK, Reinhold, 73773 Aichwald (DE)
(74) Vertreter: Abel, Martin
(86) Internationale Anmeldenummer: PCT/EP2008/002477
(87) Internationale Veröffentlichungsnummer: WO 2009/118029

(56) Entgegenhaltungen:
- EP-A- 0 860 609
- WO-A-2008/000309
- DE-A1- 19 801 234
- DE-T2- 69 814 499
- GB-A- 2 385 902

## Beschreibung

Die Erfindung betrifft eine Ventilbatterie, mit mehreren in einer Aufreihungsrichtung Seite an Seite nebeneinander angeordneten Hauptventilen, die zu ihrer Betätigung mit jeweils mindestens einem elektrisch betätigbaren Vorsteuerventil bestückt sind, das zur Zufuhr seiner elektrischen Betätigungssignale mit elektrischen Signalübertragungsmitteln der Ventilbatterie verbunden ist, wobei die Vorsteuerventile in mehreren in der Aufreihungsrichtung nebeneinander angeordnete individuellen Vorsteuereinheiten zusammengefasst sind, die jeweils ein mindestens ein Vorsteuerventil aufnehmendes Hüllgehäuse aufweisen, das mit seiner Bodenwand voraus lösbar außen an die Hauptventile angesetzt ist, wobei die Wandung des Hüllgehäuses mindestens eine Wanddurchbrechung für den Durchtritt der Signalübertragungsmittel sowie in der Bodenwand mindestens eine dem Fluidaustausch zwischen dem mindestens einen Vorsteuerventil und dem zugeordneten Hauptventil dienende Fluiddurchführung aufweist.

Aus der DE 198 01 234 C2 geht eine Ventilbatterie hervor, bei der mehrere plattenförmige Ventileinheiten unter Bildung einer Baugruppe in einer Aufreihungsrichtung aneinandergesetzt sind. Jede Ventileinheit umfasst ein Hauptventil mit einem daran angebrachten, elektrisch betätigbaren Vorsteuerventil. Die Vorsteuerventile sind mit Signalübertragungsmitteln in Form von federnden elektrischen Kontakten ausgestattet, die im zusammengebauten Zustand der Ventilbatterie eine elektrische Verkettung hervorrufen, über die den einzelnen Vorsteuerventilen selektiv ihre Betätigungssignale zugeführt werden können. Da die elektrischen Kontakte völlig ungeschützt sind, können verschmutzungsbedingt sehr leicht Störungen bei der Übertragung der Betätigungssignale auftreten, was die Funktionsfähigkeit der Ventilbatterie beeinträchtigt.

Aus der DE 698 14 499 T2 ist eine Ventilbatterie der eingangs genannten Art bekannt, die mehrere nebeneinander angeordnete Hauptventile aufweist, an denen jeweils eine die gleiche Baubreite wie das Hauptventil aufweisende Vorsteuereinheit montiert ist. Jede Vorsteuereinheit enthält zwei von einem Hüllgehäuse umschlossene Vorsteuerventile. Eine vergleichbar aufgebaute Ventilbatterie zeigt auch die WO 2008/000309 A.

Es ist eine Aufgabe der vorliegenden Erfindung, Maßnahmen zu treffen, die die Funktionssicherheit einer Ventilbatterie der eingangs genannten Art verbessern, ohne die Handhabung zu beeinträchtigen.

Um diese Aufgabe zu lösen, ist erfindungsgemäß vorgesehen, dass mindestens eine Vorsteuereinheit ein sich über mehrere Hauptventile hinweg erstreckendes und das mindestens eine Vorsteuerventil sämtlicher von ihm überdeckter Hauptventile aufnehmendes Hüllgehäuse aufweist.

Somit sind die Vorsteuerventile der Ventilbatterie gekapselt untergebracht und von der Umgebung abgeschottet. Anstatt jedoch, was auch denkbar wäre, auf eine Abdeckhaube für die Vorsteuerventile zurückzugreifen, kommt ein Hüllgehäuse zur Anwendung, das auch eine den Hauptventilen zugewandte Bodenwand bildet, so dass die Ventileinheiten ringsum zur Umgebung hin abgeschirmt sind. Die Bodenwand definiert die fluidische Schnittstelle der Vorsteuereinheiten zu den Hauptventilen und verfügt für den erforderlichen Fluidaustausch über geeignete Fluiddurchführungen. Für die Verlegung der Signalübertragungsmittel enthält das Hüllgehäuse mindestens eine Wanddurchbrechung.

Die Hüllgehäuse können in der Aufreihungsrichtung unterschiedliche Abmessungen aufweisen und sich dementsprechend über eine unterschiedliche Anzahl von Hauptventilen hinweg erstrecken, wobei sie jeweils alle diejenigen Vorsteuerventile aufnehmen, die den überdeckten Hauptventilen zugeordnet sind. Diese Variabilität schafft die Möglichkeit, gleichzeitig mehrere Hauptventile mit praktisch einem Handgriff an ihre Vorsteuerventile anzuschließen. Zweckmäßigerweise stellt man nach Art eines Baukastensystems mehrere Hüllgehäuse mit unterschiedlichen Breitenabmessungen zur Verfügung, die man dann je nach Anzahl der in der Ventilbatterie enthaltenen Hauptventile in geeignet erscheinender Auswahl und Reihenfolge installiert.

Mindestens ein Hüllgehäuse kann eine dahingehende Breite aufweisen, dass es sich über lediglich ein Hauptventil hinweg erstreckt und nur das oder die Vorsteuerventile dieses einen Hauptventils beinhaltet. Auf jeden Fall weist aber mindestens ein Hüllgehäuse eine Baubreite auf, die der Gesamtbreite mehrerer aneinander angesetzter Hauptventile entspricht. Hierbei kann mindestens eine Vorsteuereinheit eine der Gesamtbreite zweier aneinandergesetzter Hauptventile entsprechende Breite haben oder auch eine noch größere Breite besitzen. Ein und dieselbe Ventilbatterie kann gleichzeitig mit Vorsteuereinheiten von untereinander gleicher Breite bestückt sein, aber auch mit Vorsteuereinheiten unterschiedlicher Breite und entsprechend unterschiedlicher Ausstattung von Vorsteuerventilen.

In allen Fällen ist von Vorteil, dass das Anschließen und Demontieren der Vorsteuerventile keine unmittelbare Manipulation an den Vorsteuerventilen selbst erfordert, sondern sich auf die Handhabung der die Vorsteuerventile beinhaltenden Hüllgehäuse beschränken kann.

Vorteilhafte Weiterbildungen der Erfindung gehen aus den Unteransprüchen hervor.

In Abhängigkeit vom Typ des jeweiligen Hauptventils können einem Hauptventil nur ein Vorsteuerventil oder gleichzeitig zwei Vorsteuerventile zugeordnet sein. Die Vorsteuerventile liefern entsprechend ihrer elektrischen Betätigung ein Steuerfluid an das Hauptventil, um dessen Ventilschieber mittels Fluidkraft umzuschalten.

Zweckmäßigerweise sind die Vorsteuerventile im Innern der Hüllgehäuse an der Bodenwand angebracht. Dadurch können sie unmittelbar mit den die Bodenwand durchsetzenden Fluiddurchführungen kommunizieren.

Besonders vorteilhaft ist es, wenn die Fluiddurchführungen von Durchgangskanälen in Dichtungselementen gebildet sind, die in Wanddurchbrechungen der Bodenwände der Hüllgehäuse sitzen. Die Dichtungselemente können als separate Teile eingesetzt oder im Rahmen eines Spritzgießverfahrens unmittelbar angeformt sein. Letzteres empfiehlt sich vor allem bei einer Ausgestaltung der Hüllgehäuse aus Kunststoffmaterial.

Die Dichtungselemente übernehmen eine Doppelfunktion, indem sie sowohl gegenüber den im Innern des Hüllgehäuses angeordneten Vorsteuerventilen als auch gegenüber den mit den Vorsteuereinheiten bestückten Hauptventilen abdichten.

Alle in einer Vorsteuereinheit zusammengefassten Vorsteuerventile sind zweckmäßigerweise in einem gemeinsamen Aufnahmeraum des Hüllgehäuses untergebracht. Dies erleichtert die Bestückung und die elektrische Verschaltung. Der Aufnahmeraum ist bevorzugt größer als die Gesamtheit der darin angeordneten Vorsteuerventile, so dass ausreichend Freiraum verbleibt, um weitere Komponenten darin unterzubringen, insbesondere solche, die für die elektrische Kommunikation benötigt werden.

Die Bestückung der Hüllgehäuse mit den Vorsteuerventilen erweist sich als besonders einfach, wenn die Hüllgehäuse mehrteilig ausgebildet sind und über ein kastenförmiges Unterteil verfügen, das durch einen abnehmbaren Abschlussdeckel verschlossen ist. Der Abschlussdeckel kann beispielsweise durch Verrastung am Unterteil fixiert werden.

Das Hüllgehäuse selbst wird zweckmäßigerweise unter Mitwirkung von Hakenverbindungsmitteln an einem oder mehreren Hauptventilen fixiert. Beispielsweise kann das Hüllgehäuse auf einer Seite mittels Hakenverbindungsmitteln formschlüssig in die Hauptventile eingehängt werden und braucht dann nur noch auf der entgegengesetzten Seite durch geeignete Befestigungsmittel, beispielsweise mindestens eine Befestigungsschraube, fixiert zu werden.

Jede Vorsteuereinheit kann so ausgebildet sein, dass sie individuell mit elektrischen Betätigungssignalen versorgbar ist. Hierbei können die elektrischen Signalübertragungsmitteln ausgehend von den Vorsteuerventilen zu einer der quer zur Aufreihungsrichtung orientierten Außenflächen des Hüllgehäuses herausgeführt sein, um einen Anschluss durch individuelle Verdrahtung zu ermöglichen. Letzteres kann insbesondere durch individuell wegführende Signalkabel geschehen.

Als besonders vorteilhaft wird allerdings eine Bauform angesehen, bei der die Signalübertragungsmittel zur Bildung einer elektrischen Verkettung sämtlicher Vorsteuereinheiten ausgebildet sind. Hier können dann, beispielsweise durch einen sich durch sämtliche Hüllgehäuse hindurch erstreckenden elektrischen Bus, alle Vorsteuerventile ausgehend von einer zentralen Stelle angesteuert werden. Der elektrische Bus kann ein paralleler Bus oder ein serieller Bus sein.

Zur Realisierung der elektrischen Verkettung ist es von Vorteil, wenn die in der Aufreihungsrichtung orientierten Seitenwände jedes Hüllgehäuses eine fensterartige Wanddurchbrechung aufweisen, durch die hindurch in den einzelnen Hüllgehäusen untergebrachte Signalübertragungsmittelabschnitte miteinander verbindbar sind. Die Verbindung wird zweckmäßigerweise beim aneinander Ansetzen und voneinander Abnehmen der zuvor mit einem Hüllgehäuse ausgestatteten Hauptventile automatisch hergestellt oder unterbrochen. Jede Vorsteuereinheit kann zu diesem Zweck im Bereich ihrer Wanddurchbrechungen über elektromechanische Schnittstellenmittel verfügen, insbesondere über Steckkontaktmittel, die eine leicht lösbare elektromechanische Verbindung ermöglichen.

An der Außenfläche mindestens einer in der Aufreihungsrichtung orientierten Seitenwände jedes Hüllgehäuses befindet sich zweckmäßigerweise eine die dortige Wanddurchbrechung umrahmende Dichtung, die an der Außenwand der gegenüberliegenden Seitenwand des benachbarten Hüllgehäuses dichtend zur Anlage gelangen kann, um einen Eintritt von Verunreinigungen oder Feuchtigkeit ins Innere der Hüllgehäuse zu verhindern.

Die Vorsteuereinheiten sind insbesondere so ausgebildet, dass sie sich auch ohne zugeordnete Hauptventile, in diesem Fall als eigenständige Steuerventileinheiten, nutzen lassen. Sie können in diesem Fall mit ihrer Bodenwand voraus an eine ventillose Grundplatte angebaut werden, die über von den Vorsteuerventilen steuerbare Fluidkanäle verfügt. Möglich ist dies, weil alle für die Vorsteuerung der Hauptventile erforderlichen Komponenten in den Vorsteuereinheiten zusammengefasst sind, also sowohl die elektrische Aktuatorik als auch die Ventilmittel der Vorsteuerventile. Die elektrische Aktuatorik kann insbesondere in Gestalt von Elektromagneten oder von piezoelektrischen Einrichtungen gebildet sein.

Die mit den Vorsteuereinheiten ausgestatteten Hauptventile enthalten bevorzugt jeweils eine Gehäuseplatte, in der nicht nur mindestens ein Ventilschieber des Hauptventils untergebracht ist, sondern die auch quer zu ihrer Plattenebene von Durchgangskanälen durchsetzt ist, die sich bei aneinander angesetzten Hauptventilen zu mindestens einem Versorgungskanal und mindestens einem Abführkanal für das Druckmedium ergänzen. Die Gehäuseplatte ist insbesondere einstückig ausgebildet.

Abweichend hiervon lässt sich der Erfindungsgedanke jedoch auch bei solchen Ventilbatterien realisieren, deren Hauptventile auf einer gesonderten Grundplatte montiert sind, wobei der mindestens eine gemeinsame Versorgungskanal und Abführkanal in der Grundplatte verläuft. Während hier die Hauptventile in der Regel jeweils einzeln auf der Grundplatte fixiert werden, erfolgt bei der mit einer Gehäuseplatte versehenen Ausführungsform in der Regel eine Zusammenfassung sämtlicher Hauptventile zur einer Hauptventileinheit durch unmittelbar zwischen den Hauptventilen wirksame Befestigungsmittel, beispielsweise Zuganker.

Beispielsweise um Diagnoseaufgaben zu bewältigen oder um aus sonstigen Gründen mit externen Komponenten elektrisch kommunizieren zu können, kann mindestens ein Hüllgehäuse an insbesondere der der Bodenwand entgegengesetzten Deckenwand über geeignete elektrische Ein- und/oder Ausgänge verfügen. Hier können beispielsweise auch Sensoren angeschlossen werden, wenn deren Signale bei der Ansteuerung der Vorsteuerventile berücksichtigt werden sollen.

Nachfolgend wird die Erfindung anhand der beiliegenden Zeichnung näher erläutert. In dieser zeigen:

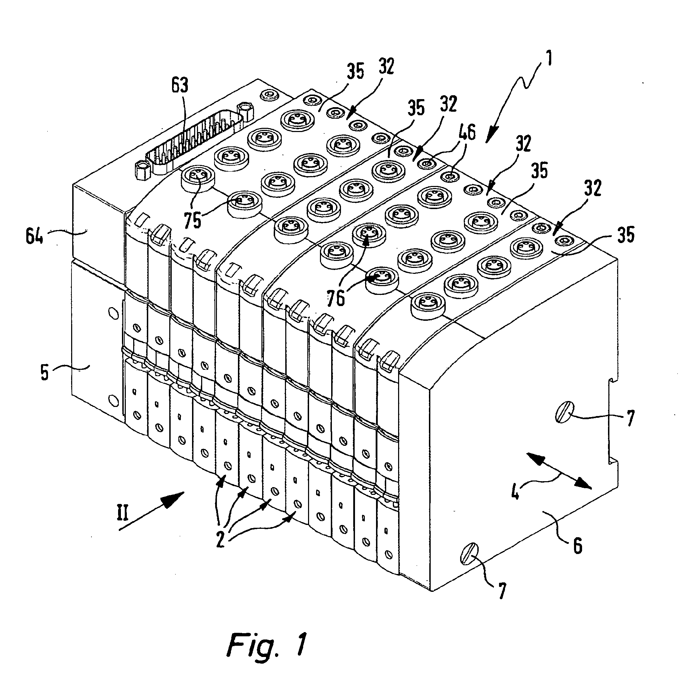

- Figur 1: eine bevorzugte erste Bauform der erfindungsgemäßen Ventilbatterie in einer perspektivischen Darstellung,

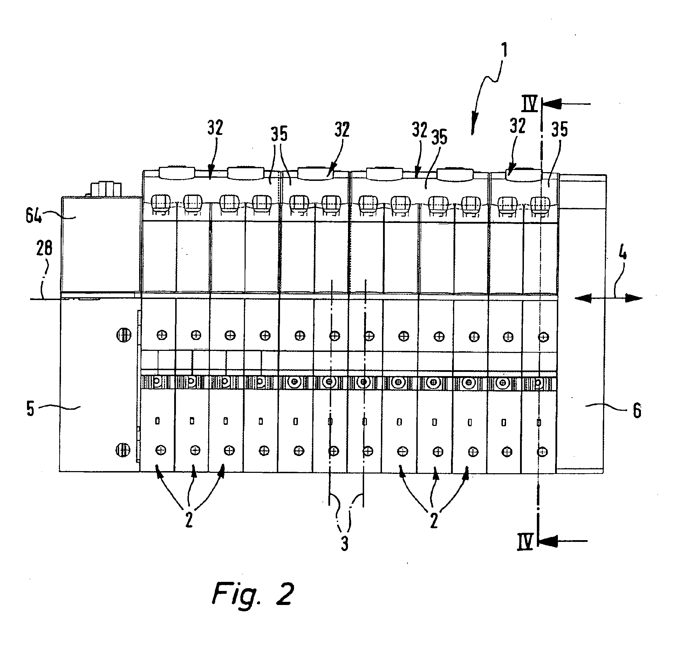

- Figur 2: die Ventilbatterie aus Figur 1 in einer Seitenansicht mit Blickrichtung gemäß Pfeil II,
- Figur 3: die Ventilbatterie aus Figur 1 in einer Explosionsdarstellung,
- Figur 4: einen Querschnitt durch die Ventilbatterie gemäß Schnittlinie IV-IV aus Figur 1, und
- Figur 5: einen Längsschnitt durch die Ventilbatterie gemäß Schnittlinie V-V aus Figur 4, wobei nicht alle in den Hüllgehäusen 35 angeordneten elektrischen Komponenten abgebildet sind.

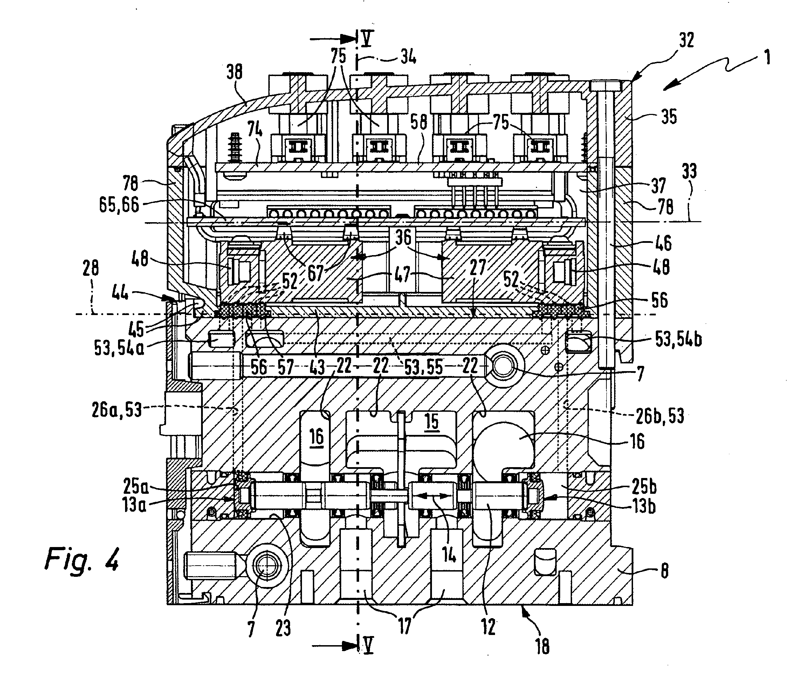

Die in ihrer Gesamtheit mit Bezugsziffer 1 bezeichnete Ventilbatterie enthält eine Mehrzahl von plattenförmigen Hauptventilen 2, die mit zueinander parallelen Plattenhauptebenen 3 in einer durch einen Doppelpfeil angedeuteten Aufreihungsrichtung 4 Seite an Seite nebeneinander angeordnet sind. In der Figur 4 verläuft die Aufreihungsrichtung 4 senkrecht zur Zeichenebene.

An die beiden letzten der Reihe von Hauptventilen 2 schließt sich eine erste bzw. zweite Endplatte 5, 6 an. In den beiden Endplatten 5, 6 verankerte Zuganker 7 durchsetzen sämtliche Hauptventile 2 in der Aufreihungsrichtung 4 und spannen die Endplatten 5, 6 mit den Hauptventilen 2 lösbar zu einer Ventilbaugruppe zusammen.

Die Hauptventile 2 enthalten jeweils eine bevorzugt einstükkige Gehäuseplatte 8 mit mindestens einem darin angeordneten, sich in der Plattenhauptebene 3 erstreckenden Ventilschieber 12. Der Ventilschieber 12 kann durch gesteuerte Fluidbeaufschlagung zweier mit ihm antriebsmäßig verbundener, einander entgegengesetzt orientierter Beaufschlagungsflächen 13a, 13b gemäß Doppelpfeil 14 zwischen verschiedenen Schaltstellungen relativ zur Gehäuseplatte 8 umgeschaltet werden. Je nach Schaltstellung werden ein sämtliche Hauptventile 2 in der Aufreihungsrichtung 4 durchsetzender Versorgungskanal 15 und zwei parallel dazu verlaufende Abführkanäle 16 abwechselnd gegensinnig mit jeweils einem von zwei Arbeitskanälen 17 verbunden, die parallel zur Plattenhauptebene 3 verlaufen und zu einer beim Ausführungsbeispiel an der Unterseite der Hauptventile 2 befindlichen Außenfläche 18 einer jeweiligen Gehäuseplatte 8 ausmünden.

An die Arbeitskanäle 17 sind nicht weiter dargestellte Fluidleitungen anschließbar, die zu zu betätigenden Verbrauchern führen, insbesondere zu mittels Fluidkraft betätigbaren Antrieben.

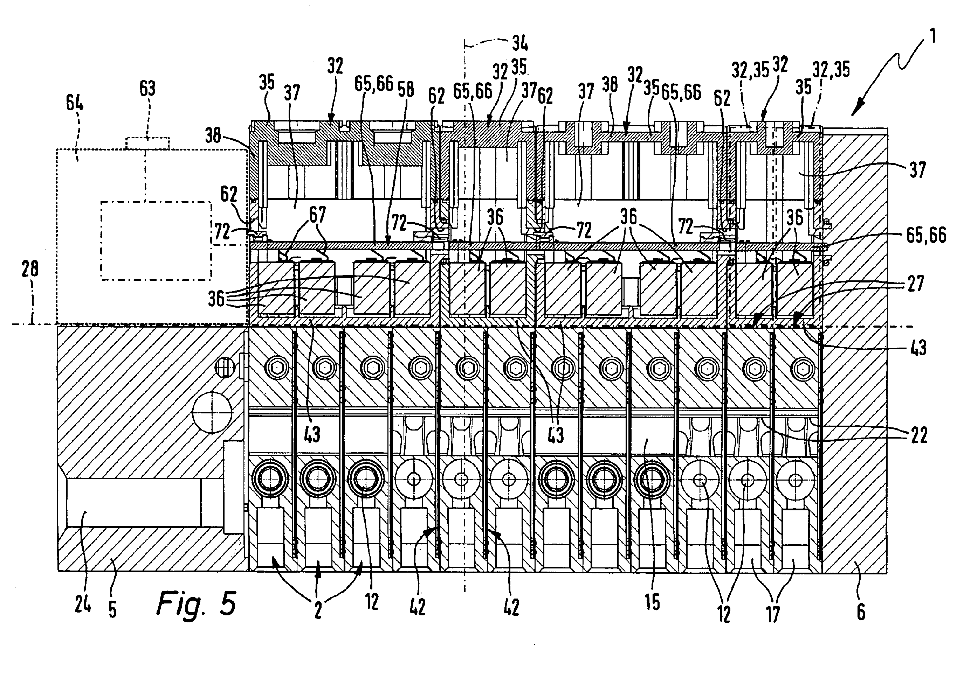

Der Versorgungskanal 15 und die beiden Abführkanäle 16 resultieren aus miteinander fluchtenden Durchgangskanälen 22, die eine jeweilige Gehäuseplatte 8 in der Aufreihungsrichtung 4 durchsetzen und sich bei aneinander angesetzten Hauptventilen 2 zu dem Versorgungskanal 15 sowie den Abführkanälen 16 ergänzen, wie dies in Figur 5 anhand des in der Schnittebene liegenden Versorgungskanals 15 deutlich wird.

Die Durchgangskanäle 22 sind insbesondere so angeordnet, dass sie unmittelbar die längliche Ausnehmung 23 der Gehäuseplatte 8 durchsetzen, die den Ventilschieber 12 aufnimmt.

Bei einem nicht gezeigten Ausführungsbeispiel erstrecken sich der Versorgungskanal 15 und die Abführkanäle 16 in einer gesonderten, einstückigen oder mehrteiligen Grundplatte, auf die die Hauptventile 1 einzeln Seite an Seite montiert sind.

Die Anzahl und Verteilung der Versorgungs- und Abführkanäle 15, 16 kann auch vom Ausführungsbeispiel abweichen.

Der Versorgungskanal 15 und die Abführkanäle 16 setzen sich in beispielsweise der ersten Endplatte 5 in Anschlusskanälen 24 fort, über die die Einspeisung und Abfuhr des Druckmediums in die bzw. aus der Ventilbatterie 1 stattfindet. Als Druckmedium wird insbesondere Druckluft verwendet, wenngleich auch andere gasförmige Medien oder auch Flüssigkeiten einsetzbar sind.

Die zweite Endplatte 6 hat beim Ausführungsbeispiel nur eine Abschlussfunktion, um die Versorgungs- und Abführkanäle 15, 16 endseitig abzusperren. Zusätzlich oder alternativ könnten aber auch hier Anschlusskanäle 24 vorhanden sein.

Die beiden Beaufschlagungsflächen 13a, 13b begrenzen jeweils eine Beaufschlagungskammer 25a, 25b, in die ein die Gehäuseplatte 8 durchsetzender eigener Vorsteuer-Arbeitskanal 26b, 26b einmündet. Die beiden Vorsteuer-Arbeitskanäle 26a, 26b münden andernends zu einer beim Ausführungsbeispiel der unteren Außenfläche 18 entgegengesetzten und von einer der schmalseitigen Außenflächen des Hauptventils 2 gebildeten Montagefläche 27 aus.

Um den Ventilschieber 12 nach Bedarf zu Positionieren, ist über die Vorsteuer-Arbeitskanäle 26a, 26b ein Vorsteuerfluid gesteuert zu- und abführbar. Es handelt sich insbesondere um Fluid gleicher Art, wie es auch vom Ventilschieber 12 gesteuert wird.

Die Hauptventile 2 sind so ausgebildet, dass ihre Montageflächen 27 in einer gemeinsamen Montageebene 28 verlaufen. Diese erstreckt sich rechtwinkelig zu den Plattenhauptebenen 3.

An die Montageflächen 27 sind mehrere bevorzugt im Wesentlichen blockförmige Vorsteuereinheiten 32 angesetzt und zwar in der Aufreihungsrichtung 4 aufeinanderfolgend. Im Querschnitt rechtwinkelig zu der Aufreihungsrichtung 4 - also entsprechend der durch Schnittlinie IV-IV definierten Schnittebene - haben alle Vorsteuereinheiten 32 zumindest im Wesentlichen die gleiche Außenkontur. Ihre rechtwinkelig zu der Aufreihungsrichtung 4 gemessene Länge entspricht zweckmäßigerweise derjenigen der einzelnen Montageflächen 27, so dass sie die Montageflächen 27 jeweils über ihre gesamte Länge überdecken. Die Längsachse der Vorsteuereinheiten 32 ist bei 33 angedeutet und verläuft rechtwinklig zu der Aufreihungsrichtung 4 sowie zur Hochachse 34 der Hauptventile 2, die sich rechtwinkelig zur Montagefläche 27 erstreckt.

Die in der Aufreihungsrichtung 4 gemessene Breite der Vorsteuereinheiten 32 kann bei allen Vorsteuereinheiten 32 gleich sein, kann aber auch derart variieren, dass an der Montageebene 28 gleichzeitig Vorsteuereinheiten 32 mit voneinander abweichender Breite installiert sind. Dies ist beim Ausführungsbeispiel der Fall.

In allen Fällen entspricht die Breite der Vorsteuereinheiten 32 entweder derjenigen eines einzigen Hauptventils 2 oder einem ganzzahligen Vielfachen davon. Dementsprechend überdecken die Vorsteuereinheiten 32 in Abhängigkeit von ihrer Breite jeweils nur ein Hauptventil 2 oder mehrere Hauptventile 2 gleichzeitig.

Diese zuvor geschilderte Konstellation ist auf ein über die entsprechenden Abmessungen verfügendes, als Hohlkörper ausgebildetes Hüllgehäuse der einzelnen Vorsteuereinheiten 32 zurückzuführen. Dieses definiert die Außenkontur einer jeweiligen Vorsteuereinheit 32 und variiert dementsprechend in der in der Aufreihungsrichtung 4 gemessenen Breite.

Bei den Hauptventilen 2 handelt es sich um vorgesteuerte Ventile. Sie werden durch die Fluidkraft des schon erwähnten Vorsteuerfluides betätigt, das über die Vorsteuer-Arbeitskanäle 26a, 26b zu- und abführbar ist. Gesteuert wird die Fluidbeaufschlagung bei jedem Hauptventil 2 durch mindestens ein diesem individuell zugeordnetes Vorsteuerventil 36, das Bestandteil einer Vorsteuereinheit 32 ist und jeweils in einem im Innern eines Hüllgehäuses 35 ausgebildeten Aufnahmeraumes 37 untergebracht ist. Die Vorsteuerventile 36 sind hierbei von der den Aufnahmeraum 37 ringsum umschließenden Wandung 38 des betreffenden Hüllgehäuses 35 zur Umgebung hin abgedeckt und abgeschirmt.

Beim Ausführungsbeispiel sind jedem Hauptventil 2 zwei eigene Vorsteuerventile 36 zugeordnet. Jedes von ihnen ist für das Umschalten des Ventilschiebers 12 in einer der beiden möglichen Umschaltrichtungen 14 verantwortlich. Abweichend wäre es jedoch auch möglich, mindestens einem Hauptventil 2 nur ein Vorsteuerventil 36 zuzuordnen, wenn die Rückstellung des Ventilschiebers 12 durch Federmittel realisiert wird.

Wenn im Folgenden von zwei Vorsteuerventilen eines Hauptventils die Rede ist, gelten die diesbezüglichen Ausführungen auch für eine Ausstattung mit nur einem Vorsteuerventil.

Die einem jeweiligen Hauptventil 2 zugeordneten Vorsteuerventile 36 sind derart in den Hüllgehäusen 35 angeordnet, dass sie bei montierter Vorsteuereinheit 32 der Montagefläche 27 des zugeordneten Hauptventils 2 gegenüberliegen. Sie befinden sich innerhalb des Bereiches, der von zwei zur Aufreihungsrichtung 4 rechtwinkeligen Ebenen begrenzt ist, in denen sich die beiden in der Aufreihungsrichtung 4 orientierten Hauptseitenflächen 42 des betreffenden Hauptventils 2 erstrecken. Die Hauptseitenflächen 42 sind diejenigen Flächen, mit denen benachbarte Hauptventile 2 zur Bildung der Hauptventilbaugruppe aneinander angesetzt sind.

Jedes Hüllgehäuse 35 enthält diejenigen Vorsteuerventile 36, die für die Betätigung derjenigen Hauptventile 2 zuständig sind, über die sich das betreffende Hüllgehäuse 35 in der Aufreihungsrichtung 4 hinweg erstreckt. Somit enthält beispielsweise eine gleichzeitig zwei Hauptventile 2 überdeckende Vorsteuereinheit 32 in ihrem Innern die Vorsteuerventile 36 der beiden überdeckten Hauptventile 2.

Ein und dieselbe Ventilbatterie kann ausschließlich mit solchen Vorsteuereinheiten 32 ausgestattet sein, deren Hüllgehäuse 35 in der Aufreihungsrichtung 4 die gleiche Breite besitzen. Beispielsweise könnte jedem Hauptventil 2 eine eigene Vorsteuereinheit 32 zugeordnet sein, deren Breite derjenigen des jeweils zugeordneten Hauptventils 2 entspricht, so wie dies in Figur 5 im rechten Bereich strichpunktiert angedeutet ist. Ebenso könnten die Vorsteuereinheiten 32 bei untereinander gleicher Baubreite der Breite einer Mehrzahl von Hauptventilen 2 entsprechen. Darüber hinaus ist aber auch eine gemischte Ausstattung ein und derselben Ventilbatterie 1 mit Vorsteuereinheiten 32 bzw. Hüllgehäusen 35 unterschiedlicher Breite möglich, was durch das Ausführungsbeispiel zum Ausdruck gebracht wird. Hier ist die Anordnung von Hauptventilen 2 gleichzeitig mit sich zum einen über zwei Hauptventile 2 und zum anderen sich über vier Hauptventile 2 erstreckenden Vorsteuereinheiten 32 ausgestattet, wobei die ergänzende strichpunktierte Darstellung zeigt, dass in der gemischten Anordnung auch Vorsteuereinheiten 32 enthalten sein können, die nur ein Hauptventil 2 bedecken.

Durch Bereitstellung von Vorsteuereinheiten 32 unterschiedlicher Breite ist eine sehr variable Bestückung von Ventilbatterien 1 möglich, die in der Anzahl ihrer Hauptventile 2 variieren. Indem man beispielsweise drei Typen von Vorsteuereinheiten 32 bereitstellt, deren Breite dem einfachen, dem zweifachen und dem vierfachen eines Hauptventils 2 entspricht, kann man durch Verwendung einer jeweils geeigneten Anzahl und Mischung dieser Vorsteuereinheiten 32 jede Ventilbatterie 1 unabhängig von der Anzahl ihrer Hauptventile 2 äuβerst variabel und kostengünstig mit Vorsteuereinheiten 32 bestücken.

Die Wandung 38 der Hüllgehäuse 35 beinhaltet jeweils eine Bodenwand 43. Mit dieser Bodenwand 43 voraus sind die Hüllgehäuse 35 im Bereich der Montageebene 28 an die Hauptventile 2 lösbar angesetzt. Die Außenfläche der Bodenwand 43 kommt hierbei auf der Montagefläche 27 der jeweils überdeckten Hauptventile 2 zu liegen.

Damit die Vorsteuereinheiten 32 leicht austauschbar sind, sind sie beim Ausführungsbeispiel unter Mitwirkung von Hakenverbindungsmitteln 44 an jedem der von ihnen überdeckten Hauptventile 2 fixiert. Ineinander einhakbare Hakenabschnitte 45 finden sich zu diesem Zweck am Hauptventil 2 im Anschluss an einen der beiden schmalseitigen Endbereiche der Montagefläche 27 und am Rand der Hüllgehäuse 35 im Anschluss an die Bodenwand 43. Auf der gegenüberliegenden Seite wird jede Vorsteuereinheit 32 durch eine oder mehrere Befestigungsschrauben 46 fixiert, die das Hüllgehäuse 35 von oben her durchsetzen und in das Hauptventil 2 eingeschraubt sind.

Andere Arten der lösbaren Befestigung der Vorsteuereinheiten 32 sind ebenfalls möglich.

Die Vorsteuerventile 36 sind im Innern des sie aufnehmenden Aufnahmeraumes 37 an der Bodenwand 43 angeordnet. Sie können beispielsweise durch nicht weiter abgebildete Schraubverbindungsmittel auswechselbar befestigt sein.

Jedes Vorsteuerventil 36 enthält einen elektrischen Antriebsteil 47, beispielsweise ein Elektromagnet oder eine piezoelektrische Einrichtung, sowie einen durch das Antriebsteil 47 betätigbaren Ventilteil 48.

In dem von einem Ventilteil 48 überdeckten Bereich ist die Bodenwand 43 von strichpunktiert angedeuteten Fluiddurchführungen 52 durchsetzt. Die Fluiddurchführungen 52 schaffen eine fluidische Verbindung zwischen in dem Ventilteil 48 verlaufenden Vorsteuerventilkanälen (nicht weiter dargestellt) und im zugeordneten Hauptventil 2 verlaufenden Hauptventilkanälen 53. Zu den Hauptventilkanälen 53 gehören die Vorsteuer-Arbeitskanäle 26a, 26b sowie mindestens ein Vorsteuer-Speisekanal 54a, 54b und mindestens ein Vorsteuer-Entlüftungskanal 55.

Entsprechend dem Aktivierungszustand der Antriebsteile 57 bewirken die Ventilteile 48 eine Verbindung des jeweils zugeordneten Vorsteuer-Arbeitskanals 26a, 26b mit entweder einem Vorsteuer-Speisekanal 54a, 54b oder einem Vorsteuer-Entlüftungskanal 55. Auf diese Weise kann der Ventilschieber 12 umgeschaltet werden.

Zweckmäßigerweise sind die Fluiddurchführungen 52 von Durchgangskanälen in Dichtungselementen 56 gebildet, die in Wanddurchbrechungen 57 der Bodenwand 43 eingesetzt sind. Die Dichtungselemente 56 können beispielsweise eingeschnappt sein oder unmittelbar bei der Herstellung des Hüllgehäuses 35 durch Spritzgießen eingeformt werden.

Indem die Dichtungselemente 56 so ausgebildet sind, dass sie über die Bodenwand 43 sowohl nach innen in den Aufnahmeraum 37 hinein als auch nach außen vorstehen, erreicht man einen zuverlässigen Dichtkontakt zu sowohl dem zugeordneten Vorsteuerventil 36 also auch dem Hauptventil 2. Das Dichtungselement 56 wird an die Grundfläche des Ventilteils 48 und an die Montagefläche 27 angepresst.

Indem die Dichtungselemente 56 unverlierbar am Hüllgehäuse 35 angeordnet sind, erübrigt sich ihre individuelle Handhabung bei der Montage und Demontage der Vorsteuereinheit 32.

Im Innern jedes Hüllgehäuses 35 befindet sich zweckmäßigerweise ein einziger Aufnahmeraum 37 zur gemeinsamen Aufnahme sämtlicher Vorsteuerventile 36 der betreffenden Vorsteuereinheit 32. Indem das Volumen dieses Aufnahmeraumes 37 größer ist als das Bauvolumen der aufgenommenen Vorsteuerventile 36, verbleibt zwischen letzteren und der Wandung 38 ein ausreichender Freiraum, um weitere für den Betrieb der Hauptventile 2 nutzbare Komponenten unterzubringen.

Für die elektrische Ansteuerung der Vorsteuerventile 36, genauer gesagt ihrer Antriebsteile 47, sind elektrische Signalübertragungsmittel 58 vorhanden. Letztere sind im Innern der Aufnahmeräume 37 an die Vorsteuerventile 36 angeschlossen und durch jeweils mindestens eine Wanddurchbrechung 62 der Wandung 38 hindurch nach außen geführt. Außerhalb der Hüllgehäuse 35 stehen die Signalübertragungsmittel 58 direkt oder indirekt mit einer elektrischen Zentralschnittstelle 63 in Verbindung, die eine Verbindung mit einer externen elektronischen Steuereinrichtung gestattet.

Exemplarisch ist die elektrische Zentralschnittstelle 63 als Multipol-Steckvorrichtung ausgebildet. Je nach Art der Signalübertragungsmittel 58 kann sie jedoch beispielsweise auch als Feldbusschnittstelle ausgebildet sein. In die Verbindung zwischen die Signalübertragungsmittel 58 und die Zentralschnittstelle 63 kann insbesondere ein im Anschluss an die Reihe von Vorsteuereinheiten 32 installierter Anschlussblock 64 eingeschaltet sein, der die Zentralschnittstelle 63 trägt und über interne Signalverarbeitungsmittel verfügen kann, beispielsweise ein Seriell-Parallel-Wandler. Die Ausstattung orientiert sich an der für die Signalübertragungsmittel 58 gewünschten Funktionalität.

Bevorzugt sind die Signalübertragungsmittel 58 so ausgebildet, dass sie eine elektrische Verkettung sämtlicher Vorsteuereinheiten 32 bewirken.

Zu diesem Zweck sind die Signalübertragungsmittel 58 in einzelne interne Signalübertragungsmittelabschnitte 65 unterteilt, die jeweils einer der Vorsteuereinheiten 32 zugeordnet sind und sich im jeweiligen Aufnahmeraum 37 erstrecken. Exemplarisch enthalten die Signalübertragungsmittelabschnitte 65 jeweils eine mit elektrischen Leitern versehene Verkettungsplatine 66, die sich auf der der Bodenwand 43 entgegengesetzten Oberseite über die im Aufnahmeraum 37 enthaltenen Vorsteuerventile 36 hinweg erstreckt. Sie verläuft insbesondere parallel zur Bodenwand 43. Über Federkontakte oder sonstige Kontaktmittel 67 steht die Verkettungsplatine 66 innerhalb des Aufnahmeraumes 37 mit jedem dort befindlichen Vorsteuerventile 36 in elektrischer Verbindung.

In der Aufreihungsrichtung 4 entsprechen die Abmessungen der Verkettungsplatine 66 zweckmäßigerweise denjenigen des sie aufnehmenden Hüllgehäuses 35. Auf diese Weise erstreckt sie sich in der Aufreihungsrichtung 4 ausgehend von der einen bis hin zur anderen der beiden in der Aufreihungsrichtung 4 orientierten Seitenwände 68 des betreffenden Hüllgehäuses 35. Zur besseren Unterscheidung seien die vorgenannten Seitenwände 68 im Folgenden auch als Verkettungs-Seitenwände 68 bezeichnet.

In den beiden Verkettungs-Seitenwänden 68 jedes Hüllgehäuses 35 ist eine der Wanddurchbrechungen 62 ausgebildet. Sie sind so angeordnet, dass sie in der Aufreihungsrichtung 4 miteinander fluchten. Die Verkettungsplatine 66 erstreckt sich zwischen diesen beiden Wanddurchbrechungen 62, wobei sie in die Wanddurchbrechungen 62 eintauchen oder sogar ein Stück weit hindurchragen können.

An den beiden jeweils einer Wanddurchbrechung 62 zugeordneten Endabschnitten ist jede Verkettungsplatine 66 mit elektromechanischen Schnittstellenmitteln 72 ausgestattet. Es handelt sich hierbei insbesondere um Steckverbindungsmittel, die am einen Endbereich männlich und am anderen Endbereich weiblich ausgebildet sind. Die fensterartigen Wanddurchbrechungen 62 sind so gestaltet, dass ein Durchgriff der elektrischen Schnittstellenmittel möglich ist, wobei sie insbesondere nach Art eines Längsschlitzes gestaltet sind, der sich parallel zur Ebene der Verkettungsplatine 66 erstreckt.

Die Verkettungsplatinen 66 sind im Innern des Hüllgehäuses 35 fixiert, beispielsweise durch Einrasten in entsprechende Rastkonturen an der Innenfläche der Wandung 38.

Die Wanddurchbrechungen 62 sind in den einzelnen Hüllgehäusen 35 identisch ausgebildet und platziert. Auf diese Weise liegen sich Wanddurchbrechungen 62 einander zugewandter Verkettungs-Seitenwände 68 benachbarter Vorsteuereinheiten 32 fluchtend gegenüber, und es können die im Bereich dieser Wanddurchbrechungen 62 liegenden elektrischen Schnittstellenmittel 72 derart ineinander eingreifen, dass sich eine durchgehende elektrische Verkettung sämtlicher Verkettungsplatinen 66 ergibt.

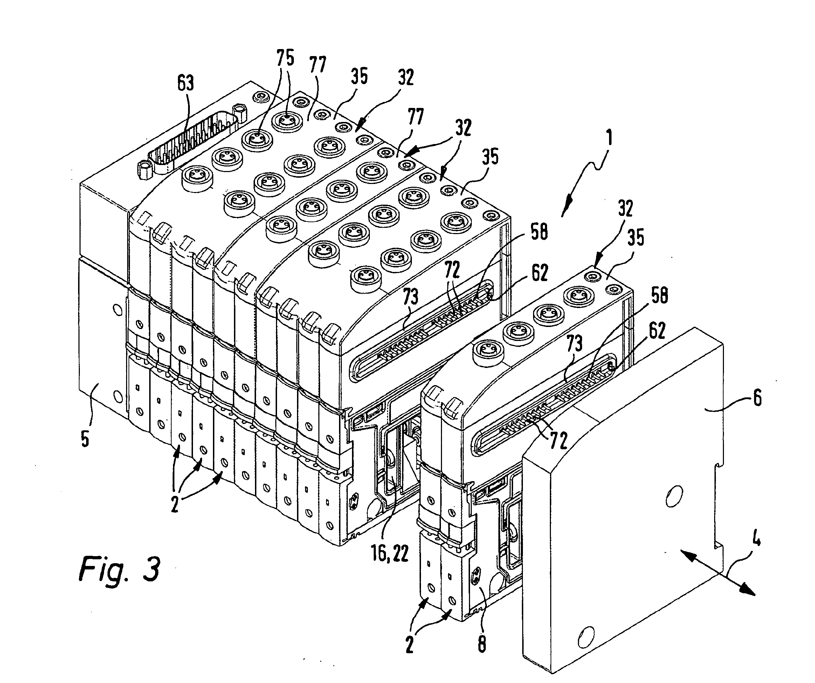

Die elektrische Verbindung lässt sich sehr einfach dadurch herstellen und aufheben, dass die Vorsteuereinheiten 32 in der Aufreihungsrichtung 4 aneinander angesetzt oder voneinander abgenommen werden. Dies geschieht zweckmäßigerweise im an den zugeordneten Hauptventilen 2 montierten Zustand, wie er aus Figur 3 ersichtlich ist.

An allen in die gleiche Richtung orientierten Verkettungs-Seitenwänden 68 der einzelnen Hüllgehäuse 35 ist eine die dortige fensterartige Wanddurchbrechung 62 umrahmende Dichtung 73 angeordnet. Sie gelangt in Dichtkontakt mit der gegenüberliegenden, bevorzugt dichtungslosen Verkettungs-Seitenwand 68 des jeweils benachbarten Hüllgehäuses 35. Dadurch werden im Fügebereich der Vorsteuereinheiten 32 die Aufnahmeräume 37 zur Umgebung hin abgedichtet.

Bei Bedarf können selbstverständlich an beiden Verkettungs-Seitenwänden 68 der Hüllgehäuse 35 entsprechende Dichtungen 73 vorhanden sein.

In den Aufnahmeräumen 37 können sich noch weitere elektrische und/oder elektronische Komponenten befinden. Exemplarisch beinhaltet jeder Aufnahmeraum 37 eine zur Verkettungsplatine 66 parallele und darüber angeordnete zweite Platine 74, die elektromechanische Schnittstellenmittel 75 trägt, welche über Wanddurchbrechungen der Wandung 38 zugänglich sind und elektrische Ein- und/oder Ausgänge 76 zum Anschließen von Sensoren oder sonstiger externer Komponenten bilden. Bevorzugt befinden sich die Ein- und/oder Ausgänge 76 an der der Bodenwand 43 entgegengesetzten Deckenwand 77 des Hüllgehäuses 35.

Die zweite Platine 74 ist im Aufnahmeraum 37 mit der Verkettungsplatine 66 elektrisch verbunden. Auf diese Weise können ein- und ausgehende Signale über die elektrische Signalübertragungsmittel 58 hinweg übertragen werden.

Die zweite Platine 74 wie auch die Ein- und Ausgänge 76 sind optional und können auch entfallen.

Anstatt durch die Signalübertragungsmittel 58 eine elektrische Verkettung zu realisieren, wäre auch eine individuelle Verdrahtung der einzelnen Vorsteuereinheiten 32 möglich. In diesem Fall könnten die Signalübertragungsmittel 58 insbesondere durch eine in der Deckenwand 77 oder in einer der beiden stirnseitigen Abschlusswände 78 des Hüllgehäuses 35 ausgebildete Wanddurchbrechung hindurch nach außen zu einer am Hüllgehäuse 35 angeordneten elektromechanischen Schnittstelle geführt werden. Dort kann dann ein wegführendes elektrisches Kabel angeschlossen werden.

Bevorzugt sind die Hüllgehäuse 35 mehrteilig ausgebildet, so dass sie sich für den Einbau der Vorsteuerventile und zugeordneten elektrischen und elektronischen Komponenten leicht öffnen lassen. Exemplarisch bestehen sie jeweils aus einem kastenförmigen Unterteil 81 mit vier davon hochragenden Seitenwänden, sowie aus einem von oben her lösbar auf das Unterteil 81 aufgesetzten Abschlussdeckel 82. Zur Vereinfachung der Montage kann der Abschlussdeckel 82 mit dem Unterteil 81 verrastbar sein. Er kann haubenartig gestaltet sein. Zur sicheren Fixierung können die oben erwähnten Befestigungsschrauben 46 sowohl durch den Abschlussdeckel 82 als auch durch das Unterteil 81 hindurchgeführt sein.

Es versteht sich, dass die Hauptventilkanäle 53 derart zur Montagefläche 27 ausmünden, dass sie beim Ansetzen der zugeordneten Vorsteuereinheit 32 zuordnungsrichtig mit den die Bodenwand 43 durchsetzenden Fluiddurchführungen 52 in Verbindung treten und dadurch der gewünschte Fluidaustausch zwischen den Vorsteuerventilen 36 und dem Hauptventil 2 möglich ist.

Durch die geschilderte Ausgestaltung ergeben sich von den Hauptventilen 2 unabhängige und eigenständig handhabbare Vorsteuereinheiten 32. Letztere können im von den Hauptventilen 2 abgenommenen Zustand als eigenständige Steuerventileinheiten genutzt werden, indem sie direkt ein zu Verbrauchern führendes Fluid steuern und keine Vorsteuerfunktion erfüllen. Beispielsweise können sie mit ihrer Bodenwand 43 voraus auf eine mit internen Verteilerkanälen versehene Verteilerplatte montiert werden. Dies ist nur möglich, weil alle für den Betrieb der Vorsteuerventile 36 erforderlichen Komponenten in der Vorsteuereinheit 32 zusammengefasst sind und keinerlei Vorsteuerkomponenten in die Hauptventile 2 integriert sind.

## Patentansprüche

1. Ventilbatterie, mit mehreren in einer Aufreihungsrichtung (4) Seite an Seite nebeneinander angeordneten Hauptventilen (2), die zu ihrer Betätigung mit jeweils mindestens einem elektrisch betätigbaren Vorsteuerventil (36) bestückt sind, das zur Zufuhr seiner elektrischen Betätigungssignale mit elektrischen Signalübertragungsmitteln (58) der Ventilbatterie verbunden ist, wobei die Vorsteuerventile (36) in mehreren in der Aufreihungsrichtung (4) nebeneinander angeordneten individuellen Vorsteuereinheiten (32) zusammengefasst sind, die jeweils ein mindestens ein Vorsteuerventil (36) aufnehmendes Hüllgehäuse (35) aufweisen, das mit seiner Bodenwand (42) voraus lösbar außen an die Hauptventile (2) angesetzt ist, wobei die Wandung (38) des Hüllgehäuses (35) mindestens eine Wanddurchbrechung (62) für den Durchtritt der Signalübertragungsmittel (58) sowie in der Bodenwand (43) mindestens eine dem Fluidaustausch zwischen dem mindestens einen Vorsteuerventil (36) und dem zugeordneten Hauptventil (2) dienende Fluiddurchführung (52) aufweist, **dadurch gekennzeichnet, dass** mindestens eine Vorsteuereinheit (32) ein sich über mehrere Hauptventile (2) hinweg erstreckendes und das mindestens eine Vorsteuerventil (36) sämtlicher von ihm überdeckter Hauptventile (2) aufnehmendes Hüllgehäuse (35) aufweist.

2. Ventilbatterie nach Anspruch 1, **dadurch gekennzeichnet, dass** im Hüllgehäuse (35) mindestens einer Vorsteuereinheit (32) wenigstens zwei zur Betätigung des gleichen Hauptventils (2) dienende Vorsteuerventile (36) untergebracht sind.

3. Ventilbatterie nach Anspruch 1 oder 2, **dadurch gekennzeichnet, dass** sich das Hüllgehäuse (35) mindestens einer Vorsteuereinheit (32) über lediglich ein Hauptventil (2) hinweg erstreckt und das mindestens eine Vorsteuerventil (36) nur dieses einen Hauptventils (2) beinhaltet und/oder dass sich das Hüllgehäuse (35) mindestens einer Vorsteuereinheit (32) über mindestens zwei einander unmittelbar benachbarte Hauptventile (2) hinweg erstreckt und das mindestens eine Vorsteuerventil (36) sämtlicher dieser mehreren Hauptventile (2) beinhaltet.

4. Ventilbatterie nach einem der Ansprüche 1 bis 3, **dadurch gekennzeichnet, dass** gleichzeitig mehrere Vorsteuereinheiten (32) an die Reihe von Hauptventilen (2) angesetzt sind, die sich in der Anzahl der von ihnen überdeckten Hauptventile (2) voneinander unterscheiden.

5. Ventilbatterie nach einem der Ansprüche 1 bis 4, **dadurch gekennzeichnet, dass** die Vorsteuerventile (36) im Innern der Hüllgehäuse (35) an der Bodenwand (43) angeordnet sind.

6. Ventilbatterie nach einem der Ansprüche 1 bis 5, **dadurch gekennzeichnet, dass** die Fluiddurchführungen (52) von Durchgangskanälen in Dichtungselementen (56) gebildet sind, die in Wanddurchbrechungen (57) der Bodenwände (43) der Hüllgehäuse (35) angeordnet sind und sowohl nach innen als auch nach auβen vorstehen, um in gleichzeitigen Dichtkontakt mit den Vorsteuerventilen (36) und den Hauptventilen (2) treten zu können.

7. Ventilbatterie nach einem der Ansprüche 1 bis 6, **dadurch gekennzeichnet, dass** sämtliche Vorsteuerventile (36) jeder Vorsteuereinheit (32) gemeinsam in einem vom Hüllgehäuse (35) umschlossenen Aufnahmeraum (37) angeordnet sind, wobei der Aufnahmeraum (37) zweckmäßigerweise ein größeres Volumen als die darin befindlichen Vorsteuerventile (36) aufweist, derart, dass zwischen den Vorsteuerventilen (36) und der Wandung (38) des Hüllgehäuses (35) ein zur Aufnahme weiterer Komponenten (58, 74, 75) nutzbarer Freiraum verbleibt.

8. Ventilbatterie nach einem der Ansprüche 1 bis 7, **dadurch gekennzeichnet, dass** die Hüllgehäuse (35) jeweils mehrteilig ausgebildet sind, mit einem die Bodenwand (43) und vier davon hochragende Seitenwände aufweisenden kastenförmigen Unterteil (81) und einem lösbar auf das Unterteil (81) aufgesetzten Abschlussdeckel (82).

9. Ventilbatterie nach einem der Ansprüche 1 bis 8, **dadurch gekennzeichnet, dass** das Hüllgehäuse (35) unter Mitwirkung von Hakenverbindungsmitteln (44) an dem mindestens einen von ihm überdeckten Hauptventil (2) fixiert ist.

10. Ventilbatterie nach einem der Ansprüche 1 bis 9, **dadurch gekennzeichnet, dass** die Signalübertragungsmittel (58) derart ausgebildet sind, dass sie eine elektrische Verkettung sämtlicher Vorsteuereinheiten (32) hervorrufen.

11. Ventilbatterie nach Anspruch 10, **dadurch gekennzeichnet, dass** die beiden in der Aufreihungsrichtung (4) orientierten Seitenwände (68) jedes Hüllgehäuses (35) derart von je einer fensterartigen Wanddurchbrechung (62) durchsetzt sind, dass sich Wanddurchbrechungen (62) einander zugewandter Seitenwände (68) unmittelbar benachbarter Hüllgehäuse (35) gegenüberliegen, und dass die Signalübertragungsmittel (58) über in den einzelnen Hüllgehäusen (35) angeordnete interne Signalübertragungsmittelabschnitte (65) verfügen, die zum Erhalt der elektrischen Verkettung durch die sich gegenüberliegenden Wanddurchbrechungen (62) hindurch miteinander verbindbar sind, wobei die internen Signalübertragungsmittelabschnitte (65) zweckmäßigerweise über im Bereich der Wanddurchbrechungen (62) angeordnete elektromechanische Schnittstellenmittel (72) verfügen, die beim seitlichen Aneinanderansetzen benachbarter Hüllgehäuse (35) eine lösbare elektromechanische Verbindung eingehen und wobei an der Außenfläche wenigstens einer der beiden in der Aufreihungsrichtung (4) orientierten Seitenwände (68) der Hüllgehäuse (35) zweckmäßigerweise eine die dortige Wanddurchbrechung (62) umrahmende Dichtung (73) angeordnet ist, die am benachbarten Hüllgehäuse (35) dichtend anliegen kann.

12. Ventilbatterie nach Anspruch 11, **dadurch gekennzeichnet, dass** die internen Signalübertragungsmittelabschnitte (65) mindestens eine mit elektrischen Leitern versehene Verkettungsplatine (66) enthalten, die zweckmäßigerweise eine derartige Länge aufweist und derart angeordnet ist, dass sie sich über sämtliche vom zugeordneten Hüllgehäuse (35) überdeckten Hauptventile (2) hinweg erstreckt.

13. Ventilbatterie nach einem der Ansprüche 1 bis 12, **dadurch gekennzeichnet, dass** die Vorsteuereinheiten (32) im von den Hauptventilen (2) abgenommenen Zustand als eigenständige Steuerventileinheiten nutzbar sind.

14. Ventilbatterie nach einem der Ansprüche 1 bis 13, **dadurch gekennzeichnet, dass** die Hauptventile (2) eine Gehäuseplatte (8) aufweisen, die mindestens einen Ventilschieber (12) des Hauptventils (2) beinhaltet und die quer zu ihrer Plattenhauptebene (3) von Durchgangskanälen (22) durchsetzt ist, wobei sich die Durchgangskanäle der einzelnen Hauptventile (2) zu mindestens einem Versorgungskanal (15) und mindestens einem Abführkanal (16) ergänzen und wobei die Gehäuseplatte (8) zweckmäßigerweise einstückig ausgebildet ist.

15. Ventilbatterie nach einen der Ansprüche 1 bis 14, **dadurch gekennzeichnet, dass** an der der Bodenwand (43) entgegengesetzten Deckenwand (77) mindestens eines Hüllgehäuses (35) elektrische Ein- und/oder Ausgänge (76) bildende elektromechanische Schnittstellenmittel (75) vorhanden sind.

## Claims

1. Valve bank, comprising a plurality of main valves (2) arranged side by side in a line-up direction (4) and fitted for their actuation with at least one electrically actuated pilot valve (36) each, which pilot valve (36) is connected to electric signal transmission means (58) of the valve bank for the supply of its electric actuating signals, wherein the pilot valves (36) are combined in a plurality of individual pilot units (32) which are arranged side by side in the line-up direction (4) and each of which has an enveloping housing (35) accommodating at least one pilot valve (36), which housing (35) is releasably fitted to the outside of the main valves (2) with its base wall (42) leading, wherein the wall (38) of the enveloping housing (35) has at least one wall opening (62) for the passage of the signal transmission means (58) and in the base wall (43) at least one fluid passage (52) for the fluid exchange between the at least one pilot valve (36) and the associated main valve (2), **characterised in that** at least one pilot unit (32) has an enveloping housing (35) which extends across several main valves (2) and accommodates the at least one pilot valve (36) of all the main valves (2) it covers.

2. Valve bank according to claim 1, **characterised in that** at least two pilot valves (36) for the actuation of the same main valve (2) are accommodated in the enveloping housing (35) of at least one pilot unit (32).

3. Valve bank according to claim 1 or 2, **characterised in that** the enveloping housing (35) of at least one pilot unit (32) extends across one main valve (2) only and the at least one pilot valve (36) contains only this one main valve (2), and/or **in that** the enveloping housing (35) of at least one pilot unit (32) extends across at least two main valves (2) which are immediately adjacent to one another and the at least one pilot valve (36) contains all of these several main valves (2).

4. Valve bank according to any of claims 1 to 3, **characterised in that** several pilot units (32) are fitted to the row of main valves (2) at the same time while differing from one another in the number of main valves (2) they cover.

5. Valve bank according to any of claims 1 to 4, **characterised in that** the pilot valves (36) are located in the interior of the enveloping housing (35) on the base wall (43).

6. Valve bank according to any of claims 1 to 5, **characterised in that** the fluid passages (52) are represented by through-passages in sealing elements (56), which are located in wall openings (57) of the base walls (43) of the enveloping housings (35) and which project both inwards and outwards in order to be able to come into simultaneous sealing contact with the pilot valves (36) and the main valves (2).

7. Valve bank according to any of claims 1 to 6, **characterised in that** all pilot valves (36) of each pilot unit (32) are jointly accommodated in a reception space (37) enclosed by the enveloping housing (35), wherein the reception space (37) expediently has a larger volume than the pilot valves (36) accommodated therein, so that a usable free space remains between the pilot valves (36) and the wall (38) of the enveloping housing (35) for the accommodation of further components (58, 74, 75).

8. Valve bank according to any of claims 1 to 7, **characterised in that** the enveloping housings (35) are of a multipart design, with a box-shaped bottom part (81) comprising the base wall (43) and four side walls projecting upwards therefrom and an end cover (82) releasably fitted to the bottom part (81).

9. Valve bank according to any of claims 1 to 8, **characterised in that** the envelooina housing (35) is secured to the at least one main valve (2) it covers with the aid of hooked connecting means (44).

10. Valve bank according to any of claims 1 to 9, **characterised in that** the signal transmission means (58) are designed such that they cause an electric interconnection of all pilot units (32).

11. Valve bank according to claim 10, **characterised in that** the two side walls (68) of each enveloping housing (35) which are oriented in the line-up direction (5) have a window-like wall opening (62) each, which is designed such that wall openings (62) of facing side walls (68) of immediately adjacent enveloping housings (35) are placed opposite one another, and **in that** the signal transmission means (58) have internal signal transmission means sections (65) which are located in the individual enveloping housings (35) and which can be connected to one another through the opposite wall openings (62) for obtaining the electric interconnection, wherein the internal signal transmission means sections (65) expediently are provided with electromechanical interfacing means (72) which are located in the region of the wall openings (62) and which establish a releasable electromechanical connection while adjacent enveloping housings (35) are laterally fitted to one another, and wherein at the outer surface of at least one of the two side walls (68) oriented in the line-up direction (4) there is expediently provided a seal (73) which frames the wall opening (62) located there and which can bear against the adjacent enveloping housing (35) in a sealing manner.

12. Valve bank according to claim 11, **characterised in that** the internal signal transmission means sections (65) contain at least one interconnection circuit board (66) which is provided with electric conductors and which expediently has such a length and is arranged such that it extends across all main valves (2) covered by the associated enveloping housing (35).

13. Valve bank according to any of claims 1 to 12, **characterised in that** the pilot units (32) can be used as independent control valve units if removed from the main valves (2).

14. Valve bank according to any of claims 1 to 13, **characterised in that** the main valves (2) have a housing plate (8) which contains at least one valve spool (12) of the main valve (2) and through which through-passages (22) extend at right angles to their plate main plane (3), wherein the through-passages of the individual main valves (2) complement one another to form at least one supply passage (15) and one outlet passage (16), and wherein the housing plate (8) is expediently designed as a single piece.

15. Valve bank according to any of claims 1 to 14, **characterised in that** electromechanical interfacing means (75) forming electric inputs and/or outputs (76) are provided on the top wall (77) of at least one enveloping housing (35) opposite the base wall (43).

## Revendications

1. Batterie de vannes, comprenant plusieurs vannes principales (2) disposées les unes à côté des autres, côte à côte, dans un sens d'alignement (4), lesquelles sont équipées, aux fins de leur actionnement, respectivement d'au moins une vanne de précommande (36) à actionnement électrique, laquelle est reliée à des moyens de transmission de signaux (58) électriques de la batterie de vannes aux fins de l'amenée de ses signaux électriques d'actionnement, sachant que les vannes de précommande (36) sont rassemblées en plusieurs unités de précommande (32) individuelles disposées les unes à côté des autres dans le sens d'alignement (4), lesquelles présentent respectivement un boîtier enveloppant (35) logeant au moins une vanne de précommande (36), boîtier enveloppant (35) dont la paroi de fond (43) est placée de manière amovible côté extérieur contre les vannes principales (2), sachant que la paroi (38) du boîtier enveloppant (35) présente au moins un ajour de paroi (62) pour le passage des moyens de transmission de signaux (58) ainsi que, dans la paroi de fond (43), au moins un passage pour fluide (52) servant à l'échange de fluide entre ladite au moins une vanne de précommande (36) et la vanne principale (2) associée, **caractérisée en ce qu'**au moins une unité de précommande (32) présente un boîtier enveloppant (35) s'étendant sur plusieurs vannes principales (2) et logeant ladite au moins une vanne de précommande (36) de toutes les vannes principales (2) recouvertes par ledit boîtier enveloppant.

2. Batterie de vannes selon la revendication 1, **caractérisée en ce qu'**au moins deux vannes de précommande (36) servant à actionner la même vanne principale (2) sont abritées dans le boîtier enveloppant (35) d'au moins une unité de précommande (32).

3. Batterie de vannes selon la revendication 1 ou 2, **caractérisée en ce que** le boîtier enveloppant (35) d'au moins une unité de précommande (32) s'étend uniquement sur vanne principale (2), et **en ce que** ladite au moins une vanne de précommande (36) ne comporte que ladite une vanne principale (2), et/ou **en ce que** le boîtier enveloppant (35) d'au moins une unité de précommande (32) s'étend sur au moins deux vannes principales (2) directement adjacentes l'une à l'autre, et comporte ladite au moins une vanne de précommande (36) de toutes lesdites plusieurs vannes principales (2).

4. Batterie de vannes selon l'une quelconque des revendications 1 à 3, **caractérisée en ce que** plusieurs unités de précommande (32) sont placées simultanément à la suite de vannes principales (2), qui se différencient les unes des autres par le nombre des vannes principales (2) qu'elles recouvrent.

5. Batterie de vannes selon l'une quelconque des revendications 1 à 4, **caractérisée en ce que** les vannes de précommande (36) sont disposées à l'intérieur du boîtier enveloppant (35) au niveau de la paroi de fond (43).

6. Batterie de vannes selon l'une quelconque des revendications 1 à 5, **caractérisée en ce que** les passages pour fluide (52) sont formés par des canaux de passage dans les éléments d'étanchéité (56), lesquels sont disposés dans des ajours de paroi (57) des parois de fond (43) du boîtier enveloppant (35) et font saillie aussi bien vers l'intérieur que vers l'extérieur afin de pouvoir entrer en contact simultané étanche avec les vannes de précommande (36) et les vannes principales (2).

7. Batterie de vannes selon l'une quelconque des revendications 1 à 6, **caractérisée en ce que** toutes les vannes de précommande (36) de chaque unité de précommande (32) sont disposées conjointement dans un espace de logement (37) entouré par le boîtier enveloppant (35), sachant que l'espace de logement (37) présente de manière appropriée un volume plus grand que les vannes de précommande (36) se trouvant dans ledit espace de logement de telle manière qu'un espace pouvant être utilisé pour loger d'autres composants (58, 74, 75) reste dégagé entre les vannes de précommande (36) et la paroi (38) du boîtier enveloppant (35).

8. Batterie de vannes selon l'une quelconque des revendications 1 à 7, **caractérisée en ce que** les boîtiers enveloppants (35) sont réalisés respectivement de manière à présenter plusieurs parties, avec une partie inférieure (81) en forme de caisson présentant la paroi de fond (43) et quatre parois latérales faisant saillie de cette dernière par le haut et un couvercle d'extrémité (82) posé de manière amovible sur la partie inférieure (81).

9. Batterie de vannes selon l'une quelconque des revendications 1 à 8, **caractérisée en ce que** le boîtier enveloppant (35) est fixé au niveau de la vanne principale (2) au moins au nombre de une recouverte par ledit boîtier enveloppant avec le concours de moyens d'assemblage à crochets (44).

10. Batterie de vannes selon l'une quelconque des revendications 1 à 9, **caractérisée en ce que** les moyens de transmission de signaux (58) sont réalisés de telle manière qu'ils provoquent un enchaînement électrique de toutes les unités de précommande (32).

11. Batterie de vannes selon la revendication 10, **caractérisée en ce que** les deux parois latérales (68), orientées dans le sens d'alignement (4), de chaque boîtier enveloppant (35) sont traversées par respectivement un ajour de paroi (62) de type fenêtre de telle manière que des ajours de paroi (62) des parois latérales (62) tournées les unes vers les autres des boîtiers enveloppants (35) directement adjacents se font face, et **en ce que** les moyens de transmission de signaux (58) disposent de sections de moyens de transmission de signaux (65) internes disposées dans les divers boîtiers enveloppants (35), lesquelles peuvent être reliées entre elles au travers des ajours de paroi (62) se faisant face afin d'obtenir l'enchaînement électrique, sachant que les sections de moyens de transmission de signaux (65) internes disposent de manière appropriée de moyens d'interface (72) électromécaniques disposés dans la zone des ajours de paroi (62), moyens d'interface(72) qui entrent en liaison électromécanique amovible lorsque des boîtiers enveloppants adjacents sont rapprochés latéralement, et sachant qu'est disposé, de manière appropriée, au niveau de la face extérieure d'au moins une des deux parois latérales (68), des boîtiers enveloppants (35), orientées dans le sens d'alignement (4), un joint d'étanchéité (73) encadrant l'ajour de paroi (62) situé à cet endroit, lequel joint d'étanchéité peut reposer de manière à assurer l'étanchéité au niveau du boîtier enveloppant (35) adjacent.

12. Batterie de vannes selon la revendication 11, **caractérisée en ce que** les sections de moyens de transmission de signaux (65) internes contiennent au moins une platine d'enchaînement (66) pourvue de conducteurs électriques, laquelle présente de manière appropriée une longueur telle et une disposition telle qu'elle s'étend sur toutes les vannes principales (2) recouvertes par le boîtier enveloppant (35) associé.

13. Batterie de vannes selon l'une quelconque des revendications 1 à 12, **caractérisée en ce que** les unités de précommande (32) peuvent être utilisées, à l'état retiré des vannes principales (2), sous la forme d'unités de vanne de commande autonomes.

14. Batterie de vannes selon l'une quelconque des revendications 1 à 13, **caractérisée en ce que** les vannes principales (2) présentent une plaque de boîtier (8), qui comporte au moins un tiroir de vanne (12) de la vanne principale (2) et qui est traversée de manière transversale par rapport à son plan principal de plaque (3) par des canaux de passage (22), sachant que les canaux de passage des diverses vannes principales (2) se complètent pour former au moins un canal d'alimentation (15) et au moins un canal d'évacuation (16), et sachant que la plaque de boîtier (8) est réalisée de manière appropriée d'un seul tenant.

15. Batterie de vannes selon l'une quelconque des revendications 1 à 14, **caractérisée en ce que** des moyens d'interface (75) électromécaniques formant des entrées et/ou des sorties (76) électriques sont présents au niveau de la paroi de couvercle (77), opposée à la paroi de fond (43), d'au moins un boîtier enveloppant (35).
